# EUROPÄISCHE PATENTSCHRIFT

(11) **EP 3 639 058 B1**
(45) Veröffentlichungstag und Bekanntmachung des Hinweises auf die Patenterteilung: **10.09.2025**
(21) Anmeldenummer: 18737497.0
(22) Anmeldetag: 15.06.2018
(51) Int. Cl.: G01S 17/10, G01S 17/42, G01S 17/46, G01S 17/88, G01S 7/487, E05F 15/43, E05F 15/74

(54) **LASERSCANNER ZUR ÜBERWACHUNG EINES ÜBERWACHUNGSBEREICHS**
LASER SCANNER FOR MONITORING A MONITORING REGION
SCANNER LASER POUR SURVEILLER UNE ZONE DE SURVEILLANCE

(30) Priorität: 16.06.2017 DE 102017113237
(43) Veröffentlichungstag der Anmeldung: 22.04.2020
(73) Patentinhaber: BEA S.A., 4031 Angleur (BE)
(72) Erfinder: VAN LOO, S bastien, 4530 Vaux-et-Borset (BE); MEYERS, Marc, 4122 Plainevaux (BE); CAMPAS, Théodoros, 4100 Boncelles (BE); KLEIN, Jean-François, 4700 Eupen (BE)
(74) Vertreter: Puschmann Borchert Kaiser Klettner Patentanwälte Partnerschaft mbB
(86) Internationale Anmeldenummer: PCT/EP2018/065988
(87) Internationale Veröffentlichungsnummer: WO 2018/229264

(56) Entgegenhaltungen:
- DE-A1- 102006 043 615
- DE-C1- 19 831 534
- DE-T2- 602004 012 086

## Beschreibung

Die Erfindung betrifft einen Laserscanner zur Überwachung eines Überwachungsbereichs vor einer Öffnung, die durch ein Verschlussmittel verschließbar ist, sowie eine Anordnung umfassend wenigstens einen Laserscanner und einen den Überwachungsbereich begrenzenden Rahmenteil.

Im Stand der Technik sind Laserscanner für automatische Türen und Fenster bekannt. In bekannter Weise umfassen diese Laserscanner eine Laufzeitauswertung, um eine Distanz vom Laserscanner zu ermitteln und eine Zuordnung zu einem Überwachungsbereich vorzunehmen. Dabei werden einzelne Laserpulse, die je einem Winkel zugeordnet sind und vom Laserscanner ausgesendet werden, von einem Objekt reflektiert. Die Reflektion wird mittels einer Laufzeitmessung ausgewertet. Ein Objekt kann so in seiner Position im Überwachungsbereich erfasst werden. Liegt die Position in einem als Gefahrenbereich definierten Bereich, wird regelmäßig ein sogenanntes "Safety" Signal an eine Steuereinheit ausgegeben, um ein Einklemmen eines Objekts durch die automatischen Verschlussmittel, insbesondere Tür oder Fenster, zu verhindern. Ein positives "Safety"-Signal veranlasst die Steuereinheit des Verschlussmittels regelmäßig zum Stopp oder zur Umkehr der Schließbewegung.

Die DE 10 2006 043 615 DE lehrt, dass zur Detektion eines Objekts in einem Überwachungsbereich ein Laserscanner mit einer Sendeinheit und einer Empfangseinheit eingesetzt werden kann. Das erhaltene Signal wird mit einem Referenzsignal verglichen, wobei das Referenzsignal mit einer Türbewegung korreliert sein kann. Ein Vergleich findet sowohl für die Laufzeitmessung als auch für die Reflektivitätsmessung statt.

Es ist Aufgabe der Erfindung, eine möglichst zuverlässige Feststellung eines gefährdeten Objekts im Gefahrenbereich - "Safety"-Bereich - zu erreichen. Eine hohe Zuverlässigkeit soll auch gegeben sein, wenn sich der Gefahrenbereich in der Nähe eines den Überwachungsbereich beschränkenden Rahmens befindet. Dies soll insbesondere für kleine Gegenstände gelten.

Die Aufgabe wird durch die Merkmale des Anspruchs 1 gelöst.

Die Unteransprüche stellen vorteilhafte Weiterbildungen der Erfindung dar.

Erfindungsgemäß ist ein Laserscanner zur Überwachung eines Überwachungsbereichs vor einer Öffnung, die durch ein Verschlussmittel verschließbar ist, wie folgend beschrieben ausgebildet. Der Laserscanner bestimmt mittels einer Auswerteeinheit über eine Laufzeitmessung eines ausgesendeten und empfangenen Laserpulses die Position eines Objekts im Überwachungsbereich. Der Überwachungsbereich umfasst wenigstens einen Gefahrenbereich, wobei bei Detektion eines Objekts im Gefahrenbereich ein "Safety"-Signal vom Laserscanner ausgegeben wird. Ist der durch die Laufzeitmessung ermittelte Abstand größer als der Abstand zum Gefahrenrandbereich, liegt keine Detektion eines Objekts im Gefahrenbereich außerhalb des Gefahrenrandbereichs vor. Dann wird durch die Auswerteeinheit eine erste Objektinformation erzeugt, nämlich, ob ein Objekt durch die Laufzeitmessung im Gefahrenrandbereich erfasst wurde. Ferner wird der empfangene Laserpuls bezüglich seiner Intensität ausgewertet und die erfasste Intensität mit einer auf einer Speichereinheit des Laserscanners hinterlegten Referenzintensität verglichen. Bei Abweichung über einen bestimmten Schwellwert wird eine zweite Objektinformation bereitgestellt, nämlich, ob sich aufgrund der Intensitätsabweichung ein Objekt im Gefahrenrandbereich befindet. Der Gefahrenrandbereich ist der Bereich, in dessen Nähe der Überwachungsbereich durch einen Rahmen physisch begrenzt ist und der zudem als Gefahrenbereich definiert ist.

Es soll ein Abstand zu einem Randbereich, der sich in der Nähe des Rahmens ergibt, der den Überwachungsbereich wenigstens einseitig, insbesondere zweiseitig begrenzt, bestimmt werden. Problematisch am Randbereich ist, dass die Genauigkeit der Laufzeitmessung im Randbereich nur ungenau möglich ist. Dies erschwert die Erkennung kleiner Objekte in diesem Bereich. Der Bereich, in dem nicht zuverlässig zwischen einem kleinen Objekt und dem Hintergrund, der durch den Rahmen gebildet wird, unterschieden werden kann, wird als Grauzone bezeichnet. Die Genauigkeit der Laufzeitmessung, die durch den reflektierten Lichtpuls erfasst wird, ist auch abhängig vom Unterschied des Reflexionsgrades des Objekts zum Hintergrund.

Ausgehend von der empfangenen Intensität kann auch eine Fehlerkorrektur der Laufzeitmessung durchgeführt werden, um eine genauere Auswertung der Position zu ermöglichen.

Gibt es einen großen Unterschied in der Reflektivität, ergibt sich eine hohe Abweichung, die sich auf die Größe der Grauzone im Randbereich des Rahmens auswirkt.

Erfindungsgemäß ist vorgesehen, dass ein Intensitätsvergleich zwischen dem Hintergrund und der aktuellen Objektsmessung vorgenommen wird. Weicht die gemessene Intensität über einen vordefinierten Schwellwert ab, wird eine Detektion gemeldet, auch wenn eine Laufzeitmessung zu keinem Detektionsergebnis innerhalb des Rahmens führt.

Die Abweichung der Intensität ist der Betrag der Differenz von Referenzintensität und Objektintensität.

Auf diese Weise kann die Ungenauigkeit der Laufzeitmessung in der Grauzone im Bereich eines Randes eliminiert werden. Dadurch wird auch für kleine Objekte eine hohe Erkennungssicherheit gewährleistet.

Der Laserscanner scannt in einem Scanvorgang über in einem Sektor verteilte Laserpulse eine Ebene, die in ihrer Projektion die zu überwachende Öffnung abdeckt, insbesondere parallel zur Öffnungsebene liegt.

Die Intensität wird mittels der Auswertung der empfangenen Pulsweite erfasst. Als Detektor wird eine Lawinen-Fotodiode verwendet.

Bevorzugt wird die Intensität über mehrere hintereinander folgende Laserpulse für einen Punkt gemittelt und ein Mittelwert gebildet, der mit einem Referenzmittelwert verglichen wird.

Die Referenzintensität wird bei Inbetriebnahme und ggfs. zyklisch aufgenommen und auf der Speichereinheit abgelegt. Die Referenzintensität kann durch die bei der Messung erfassten Laserpulse korrigiert werden. Insbesondere erfolgt eine Korrektur bei jeder Messung, in der keine Detektion für den gemessenen Laserpuls ermittelt wird. Auf diese Weise kann eine kontinuierliche Anpassung auf Umgebungsänderungen erfolgen.

Gibt es eine erste Objektinformation, die ein Objekt im Überwachungsbereich abbildet, wird ein "Safety"-Signal am Laserscannerausgang ausgegeben.

Gibt es zeitgleich eine zweite Objektinformation, die ein Objekt im Überwachungsbereich abbildet, wird ein Abgleich mit der annähernd zeitgleichen Objektinformation durchgeführt.

Der Sensor umfasst eine elektronische Auswerteeinheit zur Auswertung der Laufzeit und der Intensität. Ferner umfasst die Auswerteeinheit einen Filter, wobei die Filtereigenschaften die Größe der Grauzone beeinträchtigen.

Ferner ist es möglich, dass der Überwachungsbereich neben dem Gefahrenrandbereich auch andere Detektionsbereiche, die beispielsweise eine Aktivierung auslösen können, umfasst. Für diese Bereiche kann vorgesehen sein, dass ein Objekt in einem solchen Bereich nur für die Laufzeitmessung berücksichtigt wird. Dies hat ein robusteres Detektionsverhalten des Laserscanners zur Folge. Für den Gefahrenbereich erfolgt also eine Berücksichtigung der Intensitätsmessung nicht, sofern es sich nicht um einen Randbereich handelt.

Die Größe des definierten Randbereichs liegt regelmäßig etwa bei 2 cm bis 5 cm. Diese Größe ist unter anderem abhängig von den für die Auswertung der Laufzeitinformation verwendeten Filtern.

Gemäß einem weiteren Aspekt der Erfindung betrifft diese eine Anordnung, umfassend einen wenigstes teilweise umlaufenden Rahmen, ein Verschlussmittel zum Verschluss der durch den Rahmen gebildeten Öffnung und einen zuvor beschriebenen Laserscanner, wobei der Laserscanner derart am Rahmen montiert ist, dass der Rahmen wenigstens teilweise den Überwachungsbereich des Laserscanners begrenzt.

Bevorzugt ist der Laserscanner in einer Ecke des Rahmens montiert.

Ferner kann die Anordnung eine Steuereinheit zur Steuerung des Verschlussmittels, insbesondere eines Fensters, aufweisen, die mit dem Laserscanner zusammenwirkt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: einen erfindungsgemäßen Laserscanner;
- Fig. 2: eine schematische Ansicht einer erfindungsgemäßen Anordnung ohne Objekt im Erfassungsbereich;
- Fig. 3: eine schematische Ansicht einer erfindungsgemäßen Anordnung mit Objekt im Erfassungsbereich und im Randbereich, und
- Fig. 4: eine schematisches Ablaufdiagramm

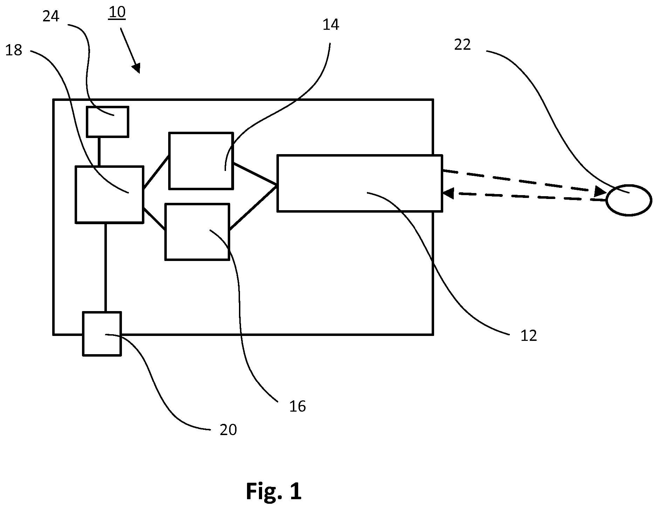

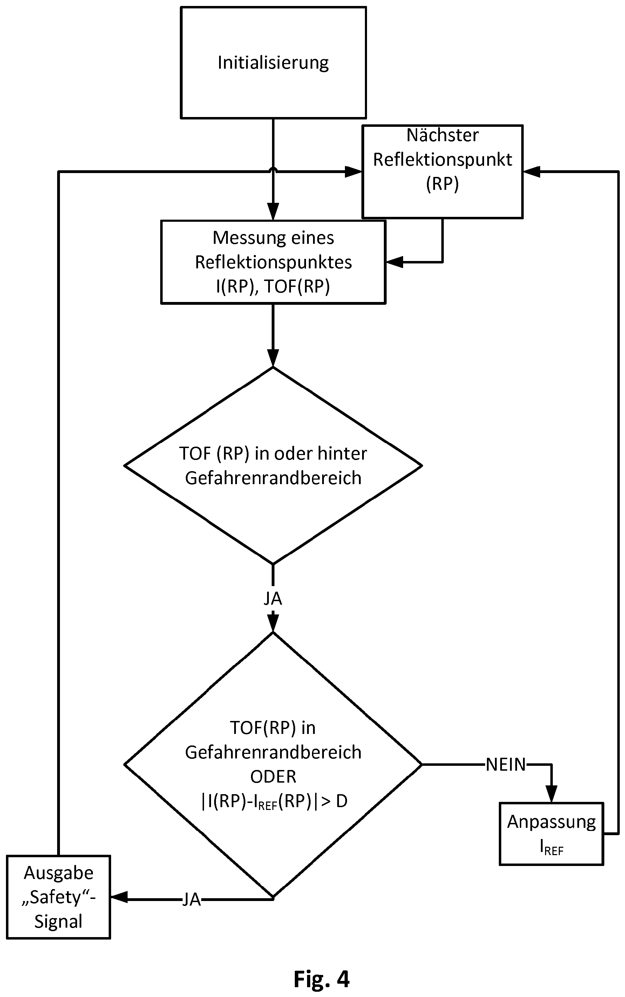

Fig.1 zeigt einen erfindungsgemäßen Laserscanner 10, der eine Laserscanner Sende/ und Empfangseinheit 12 aufweist, die über einen Winkelbereich Laserpulse aussenden kann und die von einem Objekt 22 reflektierten Laserpulse empfangen kann. Die empfangenen Laserpulse werden in einer Laufzeiterfassung 14 und in einer Intensitätserfassung 16 analysiert. Ferner ist eine Auswerteeinheit 18 vorgesehen, die abhängig von den durch die Laufzeiterfassung 14 und der Intensitätserfassung 16 erzeugten Werte eine Entscheidung trifft, ob ein positives "Safety"-Signal am "Safety"-Ausgang 20 ausgegeben werden soll, wodurch eine Steuereinheit in eine Sicherheitsmodus gesetzt werden kann. Zur Auswertung greift die Auswerteeinheit 18 auf Referenzwerte zurück, die in einer Speichereinheit 24 abgelegt sind. Die genaue Funktionsweise der Auswerteeinheit wird in der Figur 4 näher beschrieben.

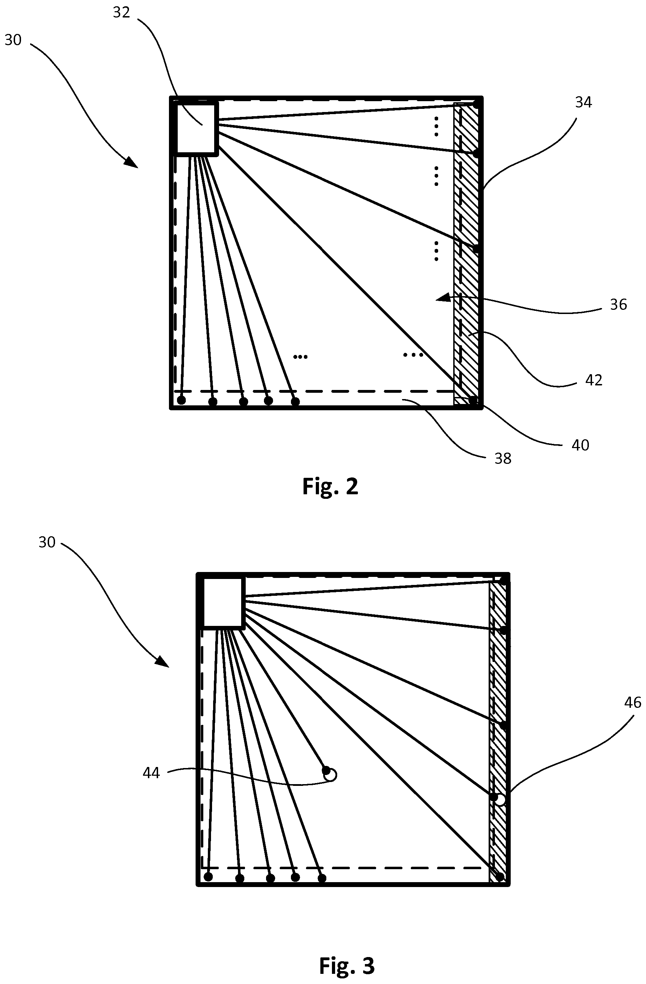

Fig. 2 zeigt eine erfindungsgemäße Anordnung 30, umfassend einen Rahmen 34 und einen Laserscanner, der als Laserscanner 32 ausgebildet ist. Der Laserscanner 32 sendet Laserpulse aus, die von einem Objekt in einem Überwachungsbereich 36 oder einem den Überwachungsbereich begrenzenden Rahmen 34 reflektiert werden kann.

Die Laufzeit von der Aussendung des Laserpulses bis zur Erfassung der Reflexion ermittelt wird. Anhand der Laufzeit, kann die Position eines Objekts innerhalb des Rahmens 34 in dem Überwachungsbereich 36 erfasst werden. Diese Art der Erfassung stößt aufgrund der Genauigkeit der Laufzeitmessung für kleine Objekte im Randbereich 38 des Überwachungsbereichs 36 in der Nähe des Rahmens 34 an seine Grenzen.

Der Randbereich 38, der durch die gestrichelte Linie begrenzt dargestellt ist, erstreckt sich von der unteren Kante über die rechte Kante des Rahmens 34 und ist an der rechten Kante auch als Gefahrenbereich 40 eingestuft. In diesem Bereich stellt der Randbereich 38 einen Gefahrenrandbereich 42 dar, der zuverlässig ausgewertet werden soll.

Erfindungsgemäß wird im Gefahrenrandbereich 42 neben der Laufzeit auch die Intensität des zurückgeworfenen Laserpulses ausgewertet. Die Auswertung geschieht wie in Fig. 4 näher beschrieben, indem in einem Initialisierungszyklus die Referenzwerte des Rahmens 34 für jeden Laserpuls ermittelt wurden. Die erfasste Intensität wird mit der im Laserscanner 32 gespeicherten Referenzintensität verglichen. Liegt die Abweichung über einen vordefinierten Schwellwert, wird dann ein "Safety" - Signal an die Kontrolleinheit zur Steuerung des Verschlussmittels, welches aus Gründen der Übersichtlichkeit hier nicht dargestellt ist, insbesondere des Fenster gesendet, sodass ein potentieller Schließvorgang unterbrochen wird.

Fig. 3 zeigt die Anordnung 30 gemäß Fig. 2 wobei in diesem Fall zwei Objekte 44, 46 abgebildet sind, wobei das Objekt 44 durch die Laufzeitmessung erkannt wird und das Objekt 46 in einer Gefahrenrandbereichsauswertung unter Berücksichtigung der Intensitätsmessung erkannt werden kann, obwohl die Laufzeitmessung in der Grauzone keine eindeutige Auswertung zulässt. Zur Messung der Intensität des Laserpulses, wird die Pulsweite des empfangenen Laserpuls ausgewertet.

Fig. 4 zeigt einen Ablaufplan zur Detektion Erkennung eines Objekts, das in einem Gefahrenrandbereich detektiert wird. Es wird eine Laufzeitmessung durchgeführt, die auch als Time of Flight Messung (TOF) bezeichnet wird. Anhand der Laufzeit des Laserpulses wird der Abstand des Punktes, an dem der Laserpuls reflektiert wird einer Position im Überwachungsbereich zugeordnet, oder verworfen sofern er außerhalb des Überwachungsbereichs liegt.

Abhängig von der Ausgestaltung der Verschlussmittel, ergibt sich ein Gefahrenbereich der dem Überwachungsbereich zugewiesen wird. So wird eine Gefahrenbereich im Überwachungsbereich definiert, sollte ein Objekt im Gefahrenbereich erkannt werden ein sogenanntes "Safety"- Signal von der Auswerteeinheit ausgegeben werden.

Falls der Überwachungsbereich im Gefahrenbereich von eine physischen Rahmen begrenzt ist, ergibt sich ein Gefahrenrandbereich. In diesem Randbereich kann eine Auswertung der Laufzeitmessung nicht immer genau genug vorgenommen werden, um eine Detektion eines kleinen Objekts zu ermöglichen.

Der Randbereich wird bei Inbetriebnahme des Laserscanners in einem Initialisierungslauf sowohl in seiner Lage mit einer TOF Messung erfasst, als auch seine Reflektivität mittels des reflektierten Laserpulses gemessen, der als Referenzwert zu dem entsprechenden Messpunkt auf einem Speicher des Laserscanners gespeichert wird.

So wird bei Auswertung der TOF Messung entschieden, ob der Wert der TOF Abstandsmessung größer als der Abstand zum definierten Gefahrenrandbereich ist.

Ist dies der Fall wird eine Gefahrenrandbereichsauswertung vorgenommen. Bei der Gefahrenrandbereichsauswertung wird neben einer ersten Objektinformation, die aus der TOF-Messung gewonnen wird eine zweite Objektinformation erstellt. Die zweite Objektinformation bildet ab, ob eine Abweichung der Reflektivität des gerade gemessenen Laserpulses größer ist als der Messwert einer zugeordneten Referenzreflektivität, welche die Reflektivität des Rahmens widerspiegelt.

Die Reflektivität wird abhängig von der Intensität des empfangenen Laserpulses ausgewertet und anhand der Pulsweite bestimmt. Liegt der Betrag der Differenz von Intensität und Referenzintensität über dem Schwellwert D wird eine positive zweite Objektinformation bereitgestellt, sonst eine negative.

Liegt der Wert der TOF-Messung des reflektierten Punktes im Gefahrenrandbereich wird ebenfalls eine positive erste Objektinformation bereitgestellt, sonst eine negative.

Die Auswerteeinheit gibt ein positives "Safety"-Signal aus, wenn die erste Objektinformation oder die zweite Objektinformation positiv ist.

Auf diese Weise können im Randbereich, in dem besonders große Ungenauigkeiten in der TOF Messung auftreten, wenn ein großer Unterschied zwischen der Reflektivität des Objekts und des dahinterliegenden Rahmens besteht weitgehend eliminiert werden, indem die Intensitätsinformation zu diesem Zweck benutzt wird.

So können auch kleine Objekte im Gefahrenrandbereich erkannt werden.

Ist die Abweichung der Intensität geringer als der Schwellwert D, wird die abgelegte Referenzreflektivität mit diesem Wert korrigiert.

### Bezugszeichenliste

- 10: Laserscanner
- 12: Laserscanner Sende-/Empfangseinheit
- 14: Laufzeitmessungserfassung
- 16: Intensitätserfassung
- 18: Auswerteeinheit
- 20: "Safety" Ausgang
- 22: Objekt
- 24: Speicher
- 30: Anordnung
- 32: Laserscanner
- 34: Rahmen
- 36: Überwachungsbereich
- 38: Randbereich
- 40: Gefahrenbereich
- 42: Gefahrenrandbereich
- 44: erstes Objekt
- 46: zweites Objekt
- D: Schwellwert

## Patentansprüche

1. Laserscanner (10, 32) zur Überwachung eines Überwachungsbereichs (36) vor einer Öffnung, die durch ein Verschlussmittel verschließbar ist, durch dessen Ausgestaltung ein Gefahrenbereich (40) im Überwachungsbereich (36) definiert wird, wobei der Überwachungsbereich (36) wenigstens einseitig von einem Rahmen (34) begrenzt ist, vor dem sich ein Randbereich (38) erstreckt, umfassend eine Laser Sende-/ Empfangseinheit (12), wobei ferner eine Laufzeiterfassung (14) vorgesehen ist, die über eine Laufzeitmessung (TOF(RP)) eines ausgesendeten und empfangenen Laserpulses die Position eines Objekts (22, 44, 46) im Überwachungsbereich (36) bestimmt, wobei ferner eine Intensitätserfassung (16) vorgesehen ist, durch die der empfangene Laserpuls bezüglich seiner Intensität (I(RP)) ausgewertet wird und die erfasste Intensität (I(RP)) von einer Auswerteeinheit (18) mit einer auf einer Speichereinheit (24) hinterlegten Referenzintensität (I_{REF}), welche die Reflektivität des Rahmens widerspiegelt, verglichen wird, wobei bei Detektion eines Objekts im Gefahrenbereich (40) ein Safety-Signal ausgegeben wird,
**dadurch gekennzeichnet, dass** der Gefahrenbereich (40) einen, von dem Rahmen (34) begrenzten, Gefahrenrandbereich (42) umfasst, wobei die Auswerteeinheit (18) derart ausgebildet ist, dass, wenn ein Wert eines durch die Laufzeitmessung ermittelten Abstands größer als der Abstand des Gefahrenrandbereichs (42) ist, eine erste Objektinformation erzeugt wird, nämlich, ob ein Objekt durch die Laufzeitmessung in dem Gefahrenrandbereich (42) erfasst wurde, und ferner bei Abweichung der erfassten Intensität (I(RP)) zu der hinterlegten Referenzintensität (I_{REF}) über einen bestimmten Schwellwert (D) eine zweite Objektinformation bereitgestellt wird, nämlich, ob aufgrund der Intensitätsabweichung sich ein Objekt im Gefahrenrandbereich (42) befindet, wobei ferner von der Auswerteeinheit (18) ein Safety-Signal erzeugt wird, wenn die erste oder die zweite Objektinformation positiv ist

2. Laserscanner nach Anspruch 1, **dadurch gekennzeichnet, dass** die Laser Sende/ Empfangseinheit (12) eine Lawinen-Photodiode umfasst.

3. Laserscanner nach einem der vorangehenden Ansprüche, **dadurch gekennzeichnet, dass** eine Initialisierungseinrichtung vorgesehen ist, die eine Initialisierung des Laserscanners ermöglicht, wobei während der Initialisierung die Referenzintensität (I_{REF}) eines Rahmens (34) im Überwachungsbereich (36) auf der Speichereinheit (24) abgelegt wird.

4. Laserscanner nach Anspruch 3, **dadurch gekennzeichnet, dass** während der Initialisierung der Überwachungsbereich (36), der Gefahrenbereich (40), der Randbereich (38) und der Gefahrenrandbereich (42) festgelegt werden.

5. Anordnung (30), umfassend einen wenigstens teilweise umlaufenden Rahmen, ein Verschlussmittel zum Verschluss der durch den Rahmen (34) gebildeten Öffnung und einen Laserscanner (32), nach einem der vorangehenden Ansprüche, wobei der Laserscanner (32) derart am Rahmen montiert ist, dass der Rahmen (34) wenigstens teilweise den Überwachungsbereich (36) des Laserscanners (32) begrenzt.

6. Anordnung nach Anspruch 5, **dadurch gekennzeichnet, dass** der Sensor (32) im Eckbereich des Rahmens (32) montiert ist.

7. Anordnung nach Anspruch 5 oder 6, **dadurch gekennzeichnet, dass** der Rahmen (34) Teil eines Fensters oder einer Laibung eines Fensters ist.

8. Anordnung nach einem der Ansprüche 5 bis 7, **dadurch gekennzeichnet, dass** das Verschlussmittel über eine Steuereinheit gesteuert wird, die mit dem Laserscanner verbunden ist.

9. Anordnung nach einem der Ansprüche 5 bis 8, **dadurch gekennzeichnet, dass** das Verschlussmittel ein Fenster ist.

## Claims

1. Laser scanner (10, 32) for monitoring a monitoring region (36) located in front of an opening adapted to be closed by a closure means, the configuration of which defines a danger zone (40) within the monitoring region (36), said monitoring region (36) being bounded, on at least one side thereof, by a frame (34) which has an edge zone (38) extending in front of it, comprising a laser transmitter/receiver unit (12), wherein a Time-of-Flight detection unit (14) is further provided which determines the position of an object (22, 44, 46) within the monitoring region (36) by means of Time-of-Flight measurement (TOF(RP)) of a transmitted and received laser pulse, wherein an intensity detection means (16) is further provided which is used to evaluate the received laser pulse in terms of its intensity (I(RP)), and an evaluation unit (18) then compares the detected intensity (I(RP)) with a reference intensity (I_{REF}) which is stored on a memory unit (24) and which indicates the reflectivity of the frame, with a safety signal being output upon detection of an object within the danger zone (40), **characterized in that** the danger zone (40) comprises a danger edge region (42) delimited by the frame (34), with the evaluation unit (18) being designed such that, if a value of a distance determined by the Time-of-Flight measurement is greater than the distance of the danger edge region (42), it will generate first object information, namely whether the Time-of-Flight measurement has detected an object within the danger edge region (42), and furthermore, in the case the detected intensity (I(RP)) deviates from the stored reference intensity (I_{REF}) above a certain threshold value (D), it will generate second object information, namely whether an object is located in the danger edge region (42) due to the intensity deviation, with the evaluation unit (18) also generating a safety signal if the first or the second object information is positive.

2. Laser scanner according to claim 1, **characterized in that** the laser transmitter/receiver unit (12) comprises an avalanche photodiode.

3. Laser scanner according to any one of the preceding claims, **characterized in that** an initialization device is provided which enables initialization of the laser scanner, with the reference intensity (I_{REF}) of a frame (34) within the monitoring region (36) being stored on the memory unit (24) during the initialization.

4. Laser scanner according to claim 3, **characterized in that** the monitoring region (36), the danger region (40), the edge region (38) and the danger edge region (42) are defined during initialization.

5. Arrangement (30) comprising an at least partially circumferential frame, a closure means for closing the opening formed by the frame (34), and a laser scanner (32) according to any one of the preceding claims, which laser scanner (32) is mounted on the frame in such a way that the frame (34) at least partially delimits the monitoring region (36) of the laser scanner (32).

6. Arrangement according to claim 5, **characterized in that** the sensor (32) is mounted in the corner region of the frame (32).

7. Arrangement according to any one of claims 5 or 6 above, **characterized in that** the frame (34) is part of a window or of a reveal of a window.

8. Arrangement according to any one of claims 5 to 7 above, **characterized in that** the closure means is controlled via a control unit which is connected to the laser scanner.

9. Arrangement according to any one of claims 5 to 8 above, **characterized in that** the closure means is a window.

## Revendications

1. Scanner laser (10, 32) pour la surveillance d'une zone de surveillance (36) devant une ouverture, qui peut être refermée par un moyen de fermeture, grâce à la conception duquel une zone de danger (40) dans la zone de surveillance (36) est définie, dans lequel la zone de surveillance (36) est limitée au moins unilatéralement par un cadre (34), devant lequel s'étend une zone périphérique (38), comprenant une unité d'émission/réception laser (12), dans lequel une détection du temps de vol (14) qui détermine la position d'un objet (22, 44, 46) dans la zone de surveillance (36) par le biais d'une mesure du temps de vol (TOF(RP)) d'une impulsion laser émise et reçue est en outre prévue, dans lequel une détection d'intensité (16) grâce à laquelle l'impulsion laser reçue est évaluée relativement à son intensité (I(RP)) est en outre prévue et l'intensité détectée (I(RP)) est comparée par une unité d'évaluation (18) à une intensité de référence (I_{REF}) enregistrée dans une unité de mémoire (24) qui traduit la réflectivité du cadre, dans lequel, lors de la détection d'un objet dans la zone de danger (40), un signal de sécurité est émis, **caractérisé en ce que** la zone de danger (40) comprend une zone périphérique de danger (42) délimitée par le cadre (34), l'unité d'évaluation (18) étant conçue de sorte que, lorsqu'une valeur d'une distance détectée par la mesure du temps de vol est supérieure à la distance de la zone périphérique de danger (42), une première information d'objet est produite, à savoir si un objet a été détecté par la mesure du temps de vol dans la zone périphérique de danger (42), et en outre en cas de divergence de l'intensité détectée (I(RP)) par rapport à l'intensité de référence (I_{REF}) enregistrée au-delà d'une valeur seuil déterminée (D) une deuxième information d'objet est mise à disposition, à savoir si du fait de la divergence d'intensité un objet se trouve dans la zone périphérique de danger (42), un signal de sécurité étant en outre produit par l'unité d'évaluation (18), lorsque la première ou la deuxième information d'objet est positive.

2. Scanner laser selon la revendication 1, **caractérisé en ce que** l'unité d'émission/réception laser (12) comprend une photodiode avalanche.

3. Scanner laser selon l'une des revendications précédentes, **caractérisé en ce qu'**un système d'initialisation qui permet une initialisation du scanner laser est prévu, l'intensité de référence (I_{REF}) d'un cadre (34) dans la zone de surveillance (36) étant enregistrée dans l'unité de mémoire (24) pendant l'initialisation.

4. Scanner laser selon la revendication 3, **caractérisé en ce que** la zone de surveillance (36), la zone de danger (40), la zone périphérique (38) et la zone périphérique de danger (42) sont définies pendant l'initialisation.

5. Ensemble (30), comprenant un cadre au moins partiellement circulaire, un moyen de fermeture pour fermer l'ouverture formée par le cadre (34) et un scanner laser (32), selon l'une des revendications précédentes, dans lequel le scanner laser (32) est monté sur le cadre de telle sorte que le cadre (34) limite au moins partiellement la zone de surveillance (36) du scanner laser (32).

6. Ensemble selon la revendication 5, **caractérisé en ce que** le capteur (32) est monté dans la zone de coin du cadre (32).

7. Ensemble selon la revendication 5 ou 6, **caractérisé en ce que** le cadre (34) fait partie d'une fenêtre ou est une embrasure d'une fenêtre.

8. Ensemble selon l'une des revendications 5 à 7, **caractérisé en ce que** le moyen de fermeture est commandé par le biais d'une unité de commande qui est reliée au scanner laser.

9. Ensemble selon l'une des revendications 5 à 8, **caractérisé en ce que** le moyen de fermeture est une fenêtre.
